# EUROPEAN PATENT APPLICATION

(11) **EP 4 593 255 A1**
(43) Date of publication of application: **30.07.2025**
(21) Application number: 25154501.8
(22) Date of filing: 28.01.2025
(51) Int. Cl.: H02K 1/20

(54) **ELECTRIC MACHINE COMPRISING HYDRAULICALLY EXPANDED INSULATED COOLING CONDUITS**

(30) Priority: 29.01.2024 US 202418425655
(71) Applicant: ABB SCHWEIZ AG, 5400 Baden (CH)
(72) Inventor: NEUPANE, Sneha, Apex, 27502 (US); MIKAIL, Rajib, Raleigh, 27603 (US); ZHONG, Sheng, Hillsborough, 27278 (US); RUTKEVICIUS, Marius, Raleigh, 27612 (US)
(74) Representative: Maiwald GmbH

(57) **Abstract**

Systems, assemblies, and devices for providing thermal heat transfer in rotating electrical machines include a stator having a body comprising at least one lamination layer, a plurality of cooling channels extending through the body, a plurality of conduits located in the plurality of cooling channels, and an insulating layer located between each conduit of the plurality of conduits and a corresponding cooling channel of the plurality of cooling channels. The insulating layer is configured to simultaneously place each conduit in thermal contact with the body at a respective channel while electrically insulating each conduit from the body without augmenting eddy current losses and reducing electromagnetic losses during operation of the electrical machines. The insulating layer also enables the cooling channels to be positioned adjacent a stator core without substantially increasing eddy current losses and electromagnetic losses caused by a relative position of the cooling channels.

## Description

### FIELD

The present disclosure relates to the field of electrical machines, and, more particularly, to hydraulically expanded insulated conduits for thermal heat transfer in electrical rotating machines.

### BACKGROUND

Electrical machines include therein rotating components for converting electrical energy to mechanical energy or vice versa. An example electrical machine includes an AC motor including therein a rotor, a stator, and one or more windings. An electric current can be applied to the windings, thereby generating an electromagnetic field that interacts with the rotor and causes the rotor to rotate around a longitudinal axis in the stator. For electrical machines of a certain rating or size, the operation of the electrical machine can generate heat, which may need cooling to prevent overheating and to avoid causing damage to the electrical machine and/or to any components in electric connection with the electrical machine.

### SUMMARY

In some embodiments, a stator assembly for an electrical rotating machine includes a body including at least one lamination layer and a plurality of cooling channels, the plurality of cooling channels extending through the body; a plurality of conduits, the plurality of conduits being located in the plurality of cooling channels; and an insulating layer, the insulating layer being located between each conduit of the plurality of conduits and a corresponding cooling channel of the plurality of cooling channels, the insulating layer being configured to simultaneously place each conduit in thermal contact with the body while electrically insulating each conduit from the body.

In some embodiments, the insulating layer enables eliminating eddy current losses and reducing electromagnetic losses while providing thermal heat transfer capabilities to remove heat generated during operation of the electrical rotating machine.

In some embodiments, the at least one lamination layer includes a first metallic material that is electrically conductive. In some embodiments, the plurality of conduits includes a second metallic material that is electrically conductive.

In some embodiments, the second metallic material includes copper.

In some embodiments, the plurality of conduits are configured to be hydraulically expanded in the plurality of cooling channels.

In some embodiments, the insulating layer is configured to be applied onto an exterior surface of each conduit and forms an insulative coating prior to inserting each conduit through the corresponding cooling channel. In some embodiments, the insulating layer further comprises a filler comprising one or more of glass beads, alumina, carbon nanotubes, graphene, boron nitride, or any combinations thereof.

In some embodiments, the insulating layer is configured to be at least partially cured prior to inserting each conduit through the corresponding cooling channel.

In some embodiments, the insulating layer is configured to be at least partially cured prior to hydraulically expanding the plurality of conduits in the plurality of cooling channels. In some embodiments, the insulating layer is fully cured after the plurality of conduits are hydraulically expanded in the plurality of cooling channels.

In some embodiments, the insulating layer is configured to be fully cured prior to hydraulically expanding the plurality of conduits in the plurality of cooling channels.

In some embodiments, the insulating layer enables the plurality of cooling channels to be positioned adjacent a stator core extending through the body without substantially increasing eddy current losses and electromagnetic losses caused by a relative position of the plurality of cooling channels.

In some embodiments, the plurality of cooling channels extend through the body in a direction substantially parallel to a stator core.

In some embodiments, a system includes an electrical rotating machine including a stator having a metal body including a stator core configured to receive a rotor, the stator including at least one lamination layer; a stator core extending through the metal body; and cooling channels extending through the metal body, the cooling channels being circumferentially arranged around the stator core; a plurality of metal conduits extending through the metal body at one or more of the cooling channels, the plurality of metal conduits being configured to be hydraulically expanded in a respective cooling channel; and an insulating layer coating an exterior surface of the plurality of metal conduits. In some embodiments, the insulating layer is located between each metal conduit of the plurality of metal conduits and the respective cooling channel, the insulating layer being configured to simultaneously place each metal conduit in thermal contact with the metal body while electrically insulating each metal conduit from the metal body.

In some embodiments, the insulating layer enables eliminating eddy current losses and reducing electromagnetic losses while providing thermal heat transfer capabilities to remove heat generated during operation of the electrical rotating machine.

In some embodiments, the plurality of metal conduits includes copper.

In some embodiments, the insulating layer is configured to be at least partially cured prior to hydraulically expanding the plurality of metal conduits in the respective cooling channel. In some embodiments, the insulating layer further includes a filler including one or more of glass beads, alumina, carbon nanotubes, graphene, boron nitride, or any combinations thereof.

In some embodiments, the insulating layer is configured to be fully cured prior to hydraulically expanding the plurality of metal conduits in the respective cooling channel.

In some embodiments, the insulating layer enables the cooling channels to be positioned in the metal body adjacent the stator core without substantially increasing eddy current losses and electromagnetic losses caused by a relative position of the cooling channels.

In some embodiments, a method of manufacturing a stator for an electrical rotating machine, the method includes arranging lamination layers in a stacked configuration to form a stator body; obtaining metal conduits configured to be inserted into one or more cooling channels formed in the stator body; applying an insulative coating to the metal conduits configured to form an insulating layer; inserting the metal conduits into the one or more cooling channels; and expanding the metal conduits in the one or more cooling channels. In some embodiments, the insulating layer is configured to be located between each metal conduit and a corresponding cooling channel, and the insulating layer being configured to simultaneously place each conduit in thermal contact with the stator body while electrically insulating each conduit from the stator body.

In some embodiments, the insulative coating is partially cured prior to inserting the metal conduits into the one or more cooling channels. In some embodiments, the insulative coating is partially cured prior to expanding the metal conduits in the one or more cooling channels. In some embodiments, the insulating layer is fully cured after the metal conduits are hydraulically expanded in the one or more cooling channels.

In some embodiments, the insulative coating is fully cured prior to expanding the metal conduits in the one or more cooling channels.

### BRIEF DESCRIPTION OF THE DRAWINGS

Some embodiments of the disclosure are herein described, by way of example only, with reference to the accompanying drawings. With specific reference now to the drawings in detail, it is stressed that the embodiments shown are by way of example and for purposes of illustrative discussion of embodiments of the disclosure. In this regard, the description taken with the drawings makes apparent to those skilled in the art how embodiments of the disclosure may be practiced.
FIG. 1 is a partially exposed side view of a non-limiting example of a system, according to some embodiments.
FIG. 2 is a perspective view of a system, according to some embodiments.
FIG. 3 is a front view of the stator of FIG. 1, according to some embodiments.
FIGS. 4A through 4D are sectional front views of non-limiting examples of the system in FIG. 1, according to some embodiments.
FIG. 5 is a graphical diagram of electromagnetic losses in electrical machines, according to some embodiments.
FIG. 6 is a flow diagram of a method, according to some embodiments.

### DETAILED DESCRIPTION

Various embodiments of the present disclosure relate to systems, apparatuses, devices, and assemblies for providing improved thermal heat transfer capabilities to electrical machines while simultaneously electrically insulating the metal conduit from the metal stator body. A system of the present disclosure may include an electrical machine including a stator, a rotor, and electrical windings, among other components. The stator may be defined as a stationary body including electrical windings. A rotor may be defined as a rotational body including a shaft extending therethrough in a longitudinal direction along an axis. The stator body may be made of an electrically conductive magnetic flux carrying metallic material. In addition, the stator body may be formed from one or more layers stacked to form laminations, the layers being made of the electrically conductive metallic material. In some embodiments, the lamination layers may be insulated relative the other layers to reduce electromagnetic losses.

The stator may include a bore extending therethrough and defining an inner stator cavity. The inner stator cavity may include a plurality of teeth formed on an inner surface of the inner stator cavity and the electrical windings may be arranged in the teeth such that they form windings therein. In addition, in the system, the rotor may be positioned inner or outer with respect to the stator body, the rotor being configured to rotate about its axis in response to an electrical current applied to the stator windings, thereby causing heat to be generated in the electrical machine.

In the system, the stator body may include cooling channels extending therethrough in a direction parallel to the longitudinal axis of the stator core and a rotor shaft. In addition, the system may include cooling conduits arranged in the respective cooling channels. The cooling conduits may be a metal tube made from electrically conductive metallic material(s). In some embodiments, the cooling conduit may be made of copper. In other embodiments, the cooling conduit may be made substantially of copper. In yet other embodiments, the cooling conduit may be made of one or more electrically conductive metal materials.

Metal cooling tubes such as, for example, copper tubes can be utilized for thermal heat transfer purposes. The metal cooling tube material may be selected due to the desirable thermal characteristics the tubes can provide for removing heat generated in the electrical machines. However, such metal cooling tubes are also excellent electrical conductors. Therefore, hydraulically expanding the metal tubes in the channels of the stator places the metal cooling tubes in electrical contact with the stator, which is typically also made of electrically conductive metallic material(s). That is, the metal cooling tubes being placed in electrical contact with the stator can function like a cage similar to a squirrel cage in the rotor of an induction motor, which in turn can result in end-to-end shaft current in the individual insulated lamination layers of the stator, induced asymmetric induced voltage in unwanted parts of the motor, and increased electromagnetic losses.

The embodiments of the present disclosure provide improvements over conventional electrical machines by including an insulating layer located between the cooling conduits and the inner surface of the channels. The insulating layer may be a layer coating an exterior surface of the metallic tube, the insulating layer being configured to place the cooling conduit in thermal contact with the inner surface of the cooling channel of the stator body, while also electrically insulating the stator body from the cooling conduit to reduce electromagnetic losses. That is, the insulating layer may be configured to maintain a certain thermal resistance to provide thermal heat transfer capabilities for reducing the temperature in the electrical machine during operation, while reducing electromagnetic losses caused by the metal in the cooling conduit from being in electric contact with the metal in the stator body.

The insulating layer may be configured to, in response to hydraulically expanding the cooling conduit in the channel, place the cooling conduit in thermal contact with the stator while also electrically insulating the metal conduit from the stator. The insulating layer may also include one or more other materials. These other materials may, for example, assist in inserting the cooling conduit in the channel, provide structural support to the filler, ensure sufficient separation between the tube and stator, and other like benefits.

Although rigid coatings such as, for example, certain kinds of polyimide insulation used as electrical insulators for electrical wiring are known in the prior art, these rigid coatings are not sufficient for insulating copper from steel. These conventional rigid coatings are not suitable for utilization as coatings for cooling conduits as described herein because these rigid coatings are not capable of withstanding the expansion process as described herein and may be susceptible to cracking, which may compromise the integrity of the insulation and poses a risk of failure and/or premature failure.

The embodiments of the present disclosure provide improvements over conventional electrical rotating machines by maintaining thermal conductivity between the cooling conduit and the stator body while also electrically insulating the cooling conduit from the stator body to reduce electromagnetic losses in the system. During a manufacture of the electrical machines, the cooling tubes can be positioned in a respective channel in the stator and hydraulically expanded using a corresponding hydraulic expansion tool such that the physical dimensions of the cooling tube expand through mechanical deformation such that the cooling tube substantially conforms to the inner dimensions of the channel. In addition, the hydraulic expansion of the cooling tubes in the channel can cause an outer surface of the cooling tube to contact an inner surface of the cooling channel to provide improved thermal heat transfer capabilities. Whereas conventional electrical rotating machines can utilize liquid cooling to remove heat, the channels extending through the stator in these conventional machines can be corrugated to help retain the cooling tubes in the channels and to direct flow through the channels.

In the various embodiments of the present disclosure, the insulating layer enables positioning the cooling conduits in the radial direction closer to the heat source (e.g., electrical windings) as compared to conventional electrical machines. That is, when forming the cooling channels in the stator body, the cooling channels may be positioned closer to the electrical windings as compared to conventional electrical machines due to reduced electromagnetic losses. In this regard, in the system, the positioning of the cooling conduits in the stator body may not necessarily be limited by electromagnetic losses as in conventional electrical machines but may instead be limited by other considerations such as, for example, structural limitations from the dimensions of the stator body between the channels and other features being able to resist deformation in response to the hydraulic expansion pressure. Other considerations may also include, for example, desired electromagnetic characteristics, desired thermal heat transfer performance, size, rating, other like factors, or any combinations thereof. For example, the position of the channels in the radial direction relative the stator core may be limited by the dimensions of the stator body located between the cooling channel and the stator core being a certain minimum width. In another example, the cooling channels may be positioned in the stator body such that they are aligned with the slots rather than being aligned with the teeth in the stator to enable achieving desired electromagnetic characteristics (e.g., magnetic field) by the electrical machine.

In conventional electrical machines, the location of the cooling channels in the stator body along a radial direction relative the inner stator cavity and the heat source (e.g., the electrical windings) is limited due to increased electromagnetic losses that occur as the cooling channels are positioned closer to the electrical windings along a radial direction in the stator body. In this regard, conventional electrical machines are designed such that the cooling channels that axially extend through the stator body are positioned along a radial direction relative the stator core and the electrical windings such that both the thermal losses and electromagnetic losses caused by the metal cooling tubes are within acceptable limits or ranges. That is, how close the cooling channels can be positioned relative from the stator core and the coils of the electrical windings along the radial direction in the stator body of conventional electrical machines is limited because the electromagnetic losses can be exponentially higher the closer the cooling channels are to the coils.

The embodiments of the present disclosure provide improvements over conventional electrical machines by eliminating the metal-to-metal contact between the internal surface of the channels and the metal cooling conduits. That is, the electromagnetic and end-to-end shaft current losses in the system can be reduced without compromising thermal performance, thereby allowing the size and placement of the tubes to be optimized as compared to conventional electrical machines. In addition, as the circulating current from metal-to-metal contact is eliminated in the system, the tubes can be moved closer to the windings, thereby allowing for more efficient heat dissipation from the windings and rotors. This also enables the system to achieve higher power density, higher efficiency, and compactness with lower electromagnetic and end-to-end shaft current losses as compared to conventional rotating electrical machines.

Among those benefits and improvements that have been disclosed, other objects and advantages of this disclosure will become apparent from the following description taken in conjunction with the accompanying figures. Detailed embodiments of the present disclosure are disclosed herein; however, it is to be understood that the disclosed embodiments are merely illustrative of the disclosure that may be embodied in various forms. In addition, each of the examples given regarding the various embodiments of the disclosure which are intended to be illustrative, and not restrictive.

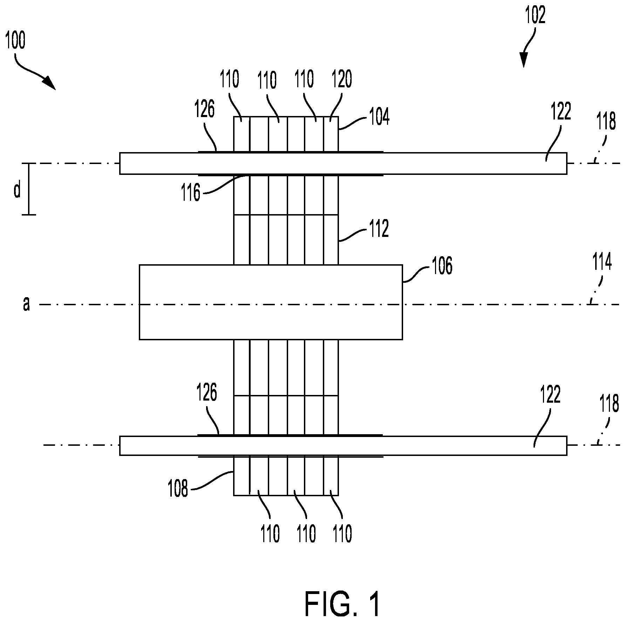

FIG. 1 is a partial exposed side view of a non-limiting example of a system 100, according to some embodiments.

The system 100 may include an electrical machine 102. The electrical machine 102 may include stator 104 and a rotor 106. The electrical machine 102 may also include electrical windings (not shown) arranged in the stator 104. An electric current may be directed through the electrical windings and an electromagnetic field may be generated in the electrical machine 102 in response to the electric current. The rotor 106 may be configured to, in response to the electromagnetic field, rotate about its longitudinal axis a in the stator 104. As a result of the electrical current applied to the electrical windings and/or the rotation of the rotor 106 in the electrical machine 102, heat may be generated in the electrical machine 102 that necessitates cooling be provided to prevent damage to the electrical machine 102 and/or damage to electrical components in electric connection with the electrical machine 102 due to an electric fault.

The stator 104 may be an assembly defined by a body 108. The body 108 may include lamination layers 110. The lamination layers 110 may be arranged in a stacked configuration to form the body 108 of the stator 104, each layer having one or more features as described in the present disclosure.

The stator 104 includes a bore that extends through the body 108 of stator 104 in a longitudinal direction, thereby forming a stator core 112 or an inner stator cavity 112. The stator core 112 extends through the body 108 on axis 114 and may be configured to receive the rotor 106 therein. In some embodiments, the axis 114 may correspond to an axis of rotation of rotor 106. The stator 104 may include a plurality of slots and teeth alternatingly formed on a surface of the stator core 112 and extending through the stator 104 in the longitudinal direction. In addition, the electrical windings may be arranged in one or more of the slots such that the electrical windings form coils for generating the electromagnetic field in response to electric current being directed through the windings.

The stator 104 may include cooling channels 116 formed therein. The cooling channel 116 may extend through the body 108 in the longitudinally direction along respective axis 118. The cooling channels 116 may be arranged in the body 108 of stator 104 between the stator core 112 and an exterior surface 120 of the body 108 and circumferentially arranged, for example, around the stator core 112. The cooling channel 116 may be positioned in the body 108 such that the axis 118 of each respective cooling channel 116 may be offset in a radial direction from the axis 114 or from stator core 112. For example, as shown in FIG. 1, the cooling channel 116 may be offset from stator core 112 by radial distance d. In stator 104, the cooling channels 116 may be in formed in many different locations relative the heat source so long as the system 100 is capable of providing optimal thermal cooling capabilities and generating the electromagnetic field with preferred electromagnetic field characteristics in the electrical machine 102, as will be further described herein. In this regard, although FIG. 1 shows cooling channel 116 extending through an intermediate portion of the body 108 of stator 104 between the stator core 112 and the respective external surfaces of the stator 104, it is to be appreciated by those having ordinary skill in the art that the embodiments illustrated in the figures are not intended to be limiting and the cooling channel 116 may be positioned in a plurality of different positions in the stator 104 relative the stator core 112 and the electrical windings in accordance with the present disclosure.

In system 100, electrical machine 102 may include conduits 122 positioned in the cooling channel 116 of the stator 104. The conduits 122 may extend through the cooling channel 116. In addition, during manufacturing of the stator 104 and/or the electrical machine 102, the conduits 122 may be positioned so that they extend through respective cooling channels 116 in the stator 104 and the conduits 122 may be hydraulically expanded in the cooling channels 116. In response to hydraulic expansion, the conduit 122 may be placed in thermal contact with the stator 104 by conduit 122 substantially contacting an inner surface of cooling channel 116. In this regard, the conduit 122 may provide thermal heat transfer capabilities to the electrical machine 102 and thereby remove heat that may build up in the electrical machine 102 during operation.

The system 100 may include insulating layers 126. The insulating layers 126 may be located between an exterior surface of conduit 122 and the respective inner surface of the cooling channel 116 where the conduit 122 is located. The insulating layers 126 are located between corresponding conduits 122 and an inner surface of the cooling channels 116, the insulating layer 126 being configured to simultaneously place each conduit 122 in thermal contact with the body 108 while electrically insulating each conduit 122 from the body 108 in the cooling channel 116.

The insulating layer 126 may include a certain thermal resistance configured to enable thermal heat transfer between the stator 104 and the conduit 122 such that the thermal heat transfer medium (e.g., fluid) can be directed through conduit 122 to remove heat that may build up in the electrical machine 102. In addition, the insulating layer 126 may be configured to electrically insulate the metal conduit 122 from the stator 104. That is, during the operation of the electrical machine 102, the insulating layer 126 prevents/eliminates the metal-to-metal contact between the conduit 122 and the stator 104 (and contact between the individual lamination layers 110 in the stator 104) to provide efficient cooling in the electrical machine 102 without augmenting eddy current losses and with reduced electromagnetic losses in the electrical machine 102. In some embodiments, the insulating layer 126 enables eliminating eddy current losses and reducing electromagnetic losses while providing thermal heat transfer capabilities to remove heat generated during operation of the electrical rotating machine 102. In other embodiments, the insulating layer 126 enables the cooling channels 116 to be positioned adjacent a stator core 112 extending through the body 108 (and adjacent the heat generating components in the stator 104) without substantially increasing eddy current losses and electromagnetic losses caused by a relative position of the cooling channels 116 were the electrical machine 102 to not include the insulating layer 126 between the cooling channel 116 and the conduit 122.

When the conduit 122 is hydraulically expanded in the cooling channel 116 such as, for example, during manufacture of the stator 104 and/or the electrical machine 102, the insulating layer 126 may be configured to substantially contact both the exterior surface of the conduit 122 and the inner surface of the cooling channel 116. The insulating layer 126 may be applied to the exterior surface of the conduit 122, according to some embodiments. In other embodiments, the insulating layer 126 may be applied as a coating to the interior of the cooling channel 116 prior to installing the conduit 122 therein.

The insulating layer 126 may include any of a plurality of different types of insulation including, but not limited to, tapes, tubing, adhesives, gels, other types of insulation, or any combinations thereof. In addition, the insulating layer 126 may include any of a plurality of different materials including, but not limited to, acrylics, polyimides, fluorinated ethylene propylene (FEP), perfluoroalkoxy (vinyl ether) resin mix (PFA), silicones, oils, ester-based compounds, epoxies, silicon-based fillers, silicon-based grease, urethane-based adhesives, other materials, or any combinations thereof.

Also, to ensure sufficient separation between the conduit 122 and stator 104, the insulating layer 126 may include fillers. The fillers may include any of a plurality of different types of materials including, but not limited to, glass beads, alumina, carbon nanotubes, graphene, boron nitride, other filler materials, or any combinations thereof. The fillers may vary in size. The size of the filler may range from 10 um to 500 um, or any range or subrange therebetween. In some embodiments, the size of the filler may range from 10 um to 500 um, 10 um to 400 um, 10 um to 300 um, 10 um to 200 um, 10 um to 100 um, 100 um to 500 um, 100 um to 400 um, 100 um to 300 um, 100 um to 200 um, 200 um to 500 um, 200 um to 400 um, 200 um to 300 um, 300 um to 500 um, or 300 um to 400 um. In other embodiments, the size of the fille may range from 10 um to 100 um, 20 um to 100 um, 30 um to 100 um, 40 um to 100 um, 50 um to 100 um, 60 um to 100 um, 70 um to 100 um, 80 um to 100 um, 90 um to 100 um, 10 um to 90 um, 20 um to 90 um, 30 um to 90 um, 40 um to 90 um, 50 um to 90 um, 60 um to 90 um, 70 um to 90 um, 80 um to 90 um, 10 um to 80 um, 20 um to 80 um, 30 um to 80 um, 40 um to 80 um, 50 um to 80 um, 60 um to 80 um, 70 um to 80 um, 10 um to 70 um, 20 um to 70 um, 30 um to 70 um, 40 um to 70 um, 50 um to 70 um, 60 um to 70 um, 10 um to 60 um, 20 um to 60 um, 30 um to 60 um, 40 um to 60 um, 50 um to 60 um, 10 um to 50 um, 20 um to 50 um, 30 um to 50 um, 40 um to 50 um, 10 um to 40 um, 20 um to 40 um, 30 um to 40 um, 10 um to 30 um, 20 um to 30 um, or 10 um to 20 um. In certain embodiments, the filler size may range from 20 um to 50 um. In addition, the fillers may be added at a volume loading of at least 20 vol% and up to 60 vol%. In some embodiments, fillers may be added at a volume loading range from 20 vol% to 60 vol%, 20 vol% to 50 vol%, 20 vol% to 40 vol%, 20 vol% to 30 vol%, 30 vol% to 60 vol%, 30 vol% to 50 vol%, 30 vol% to 40 vol%, 40 vol% to 60 vol%, 40 vol% to 50 vol%, or 50 vol% to 60 vol%. In certain embodiments, the fillers may be added at a volume loading range from 30 vol% to 50 vol% into the insulating layer 126 (e.g., thermoset polymer). The hard filler material ensures no direct metal-to-metal contact between the conduit 122 and the stator 104 when the thermoset is not yet fully cured, and the conduit 122 is hydraulically expanded in the cooling channel 116.

The insulating layer 126 may include thermally conductive polyimide films that can be directly applied onto the conduit 122, according to some embodiments. Alternatively, this thermoplastic material that forms the insulating layer 126 can be melted and applied onto conduit 122. In other embodiments, the material may be extruded over the conduit 122 prior to insertion of the conduit 122 into the cooling channel 116 and the hydraulic expansion step. However, in some embodiments, applying the insulating layer 126 over the conduit 122 and inserting the coated conduit 122 into the cooling channel 116 (even with a loose fit) may pose some risk of the insulating layer 126 being abraded/scratched.

In this regard, in some embodiments, the insulating layer 126 may be configured to set (e.g., cure) after the installation of the conduit 122 into the cooling channel 116 is complete. That is, the exterior surface 120 of the conduit 122 may be coated with the insulating layer 126 material and then inserted into the cooling channel 116 before the curing reaction is completed. In addition, in some embodiments, the conduit 122 may be expanded after the chemicals have reacted and the insulating layer 126 has fully cured. Otherwise, there may be a risk of metal-to-metal direct contact between the conduit 122 and the stator 104. This procedure may provide better insulation properties than if the insulating layer 126 were cured prior to installation of the conduit 122 into the cooling channel 116. Such chemically reactive electrical insulators (e.g., thermosets) may include, but is not limited to, silicones (e.g., thermally conductive silicones), epoxies, thermosets, adhesives, gels, other like materials, or any combinations thereof. These thermosets may be applied over the exterior surface 120 of the conduit 122 (e.g., painting), into the cooling channel 116 (e.g., using a long brush), or both. In other embodiments, the conduit 122 may be immersed into the insulating material (e.g., dip coat). In yet other embodiments, the insulating layer 126 may be a low viscosity material that may be sprayed onto the surface being treated. These thermosets may also help ease the insertion by acting as lubricants when inserting the conduit 122 through the cooling channel 116.

In some embodiments, to achieve the hydraulically expanded conduit 122 that includes the insulating layer 126 located between the conduit 122 and the stator 104, the insulation materials may first be applied onto the exterior surface 120 of the conduit 122 and then partially cured before the insertion of conduit 122 into the cooling channel 116. Once the insulating layer 126 is partially cured, then the conduit 122 may be installed in the stator 104 and expanded under hydraulic force. Since the insulating layer 126 is not fully cured, it may be more compliant and demonstrate improved resistance to cracking under expansion force. At the same time, the partially cured insulating layer 126 may form an insulating layer of sufficient thickness between the conduit 122 and the stator 104 to insulate the conduit 122 and the stator 104. After the hydraulic expansion of the conduit 122, the stator 104 may be raised to curing temperature to achieve the full curing of the insulating layer 126. In some embodiments, this process may be capable of achieving a sufficient insulation coverage without cracking the insulation.

The electrical machines 102 having the insulating layer 126 located between the conduit 122 and the stator 104 are thereby capable of being manufactured such that the cooling channels 116 may be positioned closer to the electrical windings in the radial direction compared to conventional electrical machines. In addition, the cooling channel 116 being positioned closer to the heat source provides improved heat transfer capabilities to the electrical machines 102 as compared to conventional electrical machines, while maintaining high power density, high efficiency, and maintaining a compact form factor with lower electromagnetic losses and end-to-end shaft current losses as compared to the conventional electrical machines.

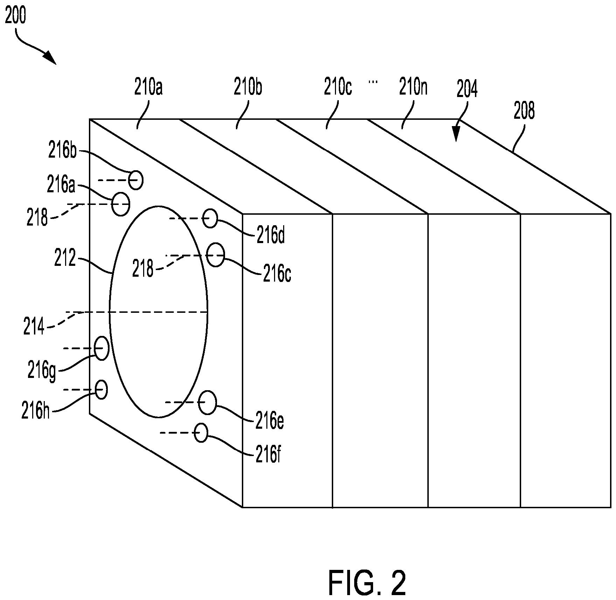

FIG. 2 is a perspective view of system 200, according to some embodiments.

The system 200 includes a stator 204. The stator 204 may include lamination layers 210 a, 210 b, 210 c, through 210 n, hereinafter referred to as lamination layers 210. The stator 204 includes a bore extending through the stator 204 and extending through the lamination layers 210 on axis 214, the bore defining a stator core 212 extending through the body 208 of stator 204. The stator 204 also includes cooling channels 216 a, 216 b, 216 c, 216 d, 216 e, and through 216 n, hereinafter referred to as cooling channels 216. The cooling channel 216 may be circumferentially arranged around the heat generating component(s) of the electrical machine such that the cooling channel 216 may be utilized to provide thermal heat transfer at the stator 204 in accordance with the present disclosure.

Each of the cooling channels 216 may extend through the body 208 of the stator 204 and through each of the lamination layers 210 along axis 218 corresponding to each respective cooling channel 216. The cooling channels 216 may form respective openings at their respective lamination layers 210, the openings having a certain diameter. That is, in stator 204, the cooling channels 216 may include different diameters based on a plurality of different factors such as, for example, a position, desired thermal heat transfer performance, electromagnetic field characteristics of the electrical machine, other factors related to performance of the electrical machines, or any combinations thereof.

As shown in FIG. 2, in some embodiments, the cooling channel 216 in the stator 204 may include different diameters. For example, the stator may include a first set cooling channels having a first diameter and a second set of cooling channels having a second diameter, the first diameter being greater than the second diameter. In other embodiments, each of the cooling channel 216 extending through the stator 204 may be substantially similar in diameter. In yet other embodiments, the cooling channels 216 configured to align between the different lamination layers 210 of the body 208 may include different diameters so that when arranged in the stacked configuration, each of the cooling channels 216 that extend through the body 208 along their respective axis 218 in the longitudinal direction along their respective axis 218 may vary in diameter, thereby forming a corrugated channel to promote flow of the heat transfer medium in the space and to provide improved heat transfer performance.

In addition, although in FIG. 2 the cooling channels 216 b, 216 d, 216 f, and 216 h positioned further away in the radial direction from stator core 212 and the electrical windings appear to be smaller in diameter relative to the diameter of cooling channels 216 a, 216 c, 216 e, and 216 g, it is to be appreciated by those having ordinary skill in the art that this not intended to be limiting and the diameter of the respective cooling channels 216 may be determinative based on their respective distances in the radial direction from the electrical windings. Instead, the diameter of each of the cooling channels 216 may be based on any of a plurality of different factors such as, for example, heat transfer performance, electromagnetic field characteristics, size, rating, other like factors, or any combinations thereof. That is, it is to be appreciated by those having ordinary skill in the art that the cooling channel 216 may be configured to include different diameter sizes in accordance with the present disclosure.

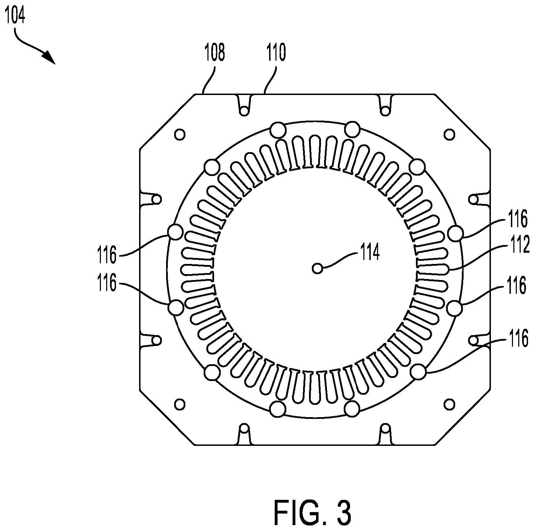

FIG. 3 is a front view of the stator 104 of FIG. 1, according to some embodiments.

The cooling channels 116 may be selectively formed in the stator 104 by any of a plurality of different methods. For example, each of the lamination layers 110 may be molded with the cooling channel 116 formed therein. In another example, the cooling channel 116 may be formed in the lamination layers 110 by drilling each cooling channel 116 into the lamination layers 110 at their respective positions. In some embodiments, the cooling channels 116 may be circumferentially located around the stator core 112 at varying distances from the stator core 112 in the radial direction. It is to be appreciated by those having ordinary skill in the art, however, that the position of the cooling channel 116 in the radial direction is not intended to be limiting. That is, in stator 104, the insulating layers 126 may be positioned in between the cooling channel 116 and the cooling conduit extending therethrough to enable the cooling channel 116 to be positioned in various positions in the radial direction from axis 114 in the lamination layers 110 to provide optimal thermal heat transfer during operation of the electrical machines while eliminating the likelihood of electromagnetic losses occurring as a result of metal-to-metal contact and end-to-end current.

In some embodiments, as shown in FIG. 3, the cooling channels 116 may be located adjacent the slots of stator core 112 rather than the teeth. By being radially aligned with the slots, or substantially aligned therewith, the cooling channels 116 may be positioned relatively closer to the stator core 112 without undesirably affecting the electromagnetic field generated by the electrical machine 102 during operation than compared to if the cooling channel 116 were radially aligned with the teeth in the stator core 112. That is, the cooling channels 116 being aligned with the teeth of the stator core 112 may result in increased electromagnetic losses in the electrical machine 102.

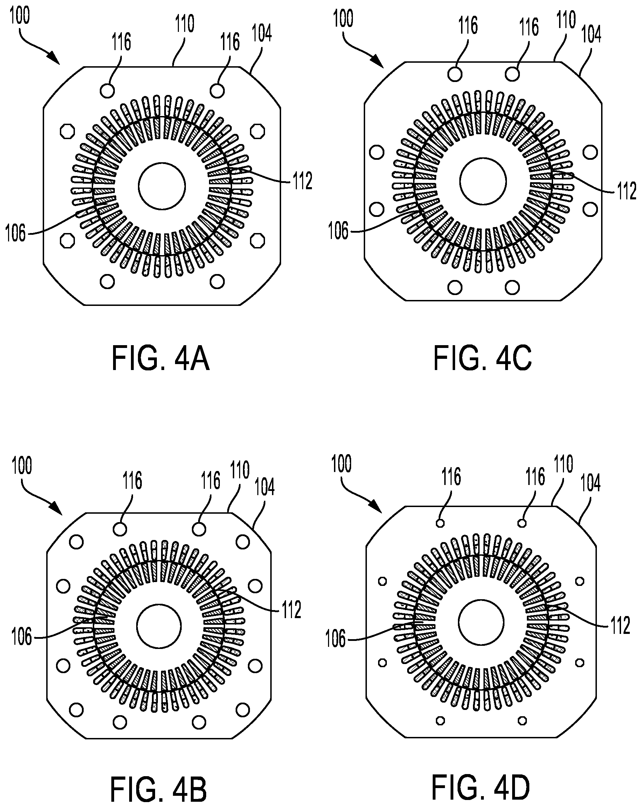

FIGS. 4A through 4D are sectional front views illustrating non-limiting examples of the system 100 in FIG. 1, according to some embodiments. Unless specifically referenced, FIG. 4A through 4D will be described collectively.

The insulating layer 126 being located between the conduit 122 and the surface of the cooling channels 116 enables the lamination layers 110 of the stator 104 to be designed and formed having a plurality of different configurations. Some non-limiting examples of the topography of the cooling channels 116 in the stator 104 are shown in FIGS. 4A through 4D. In the figures, the cooling channels 116 can be circumferentially arranged around the stator core 112 and may also be in different positions in the radial direction relative the stator core 112 and the electrical windings. Referring to FIG. 3, the cooling channels 116 may be positioned near the slots formed in the stator core 112, whereas FIG. 4A shows the cooling channel 116 may be positioned relatively further away from the stator core 112. In addition, the cooling channels 116 may have various different diameters between cooling channels 116 in the stator 104, between lamination layers 110 in the stator 104, and between different electrical machine 102. For example, the diameter of the cooling channels 116 in FIG. 4A may be a first diameter, the diameter of the cooling channels 116 in FIG. 4B may be a second diameter, and the diameter of the cooling channels in FIG. 4D may be a third diameter, the first diameter being greater than the second diameter and the third diameter, and the second diameter being greater than the third diameter. It is to be appreciated by those having ordinary skill in the art that the relative sizes and dimensions of the cooling channels as shown in the figures are not intended to be limiting and may include any of a plurality of different sizes, dimensions, and locations so long as the cooling channels are capable of being utilized in cooperation with the conduits to remove heat that is generated in the electrical machines during operation and in accordance with the present disclosure.

Due to the insulating layer 126, the position of the cooling channels 116 is not limited by increased electromagnetic losses as if the electrical machine 102 did not include the insulating layer 126 therein. Instead, the position of the cooling channel 116 may be limited by other considerations such as, for example, physical and mechanical limitations of the stator 104. For example, the cooling channel 116 may have to be formed a certain distance from the stator core 112 so that the body 108 of stator 104 may provide sufficient structural support between the cooling channel 116 and the stator core 112 such that the structural integrity of the stator 104 is not challenged or negatively affected.

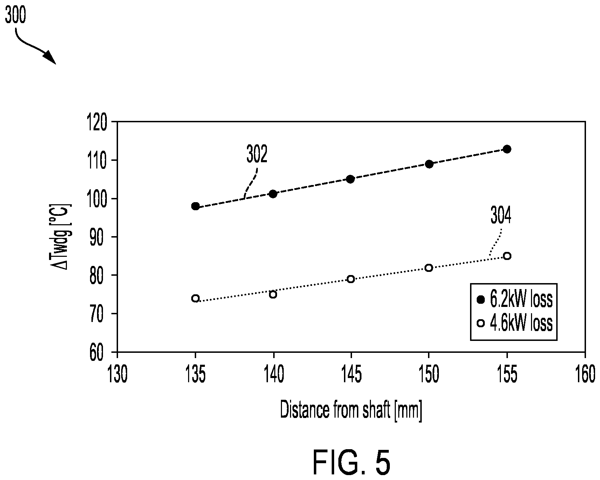

FIG. 5 is a graphical diagram 300 illustrating electromagnetic losses in electrical machines, according to some embodiments. In FIG. 5, the performance of electrical machine 302 and electrical machine 304 based on winding temperature (ΔTwdg) and shaft distance (from a central axis of rotor shaft) are graphically illustrated. Electrical machine 302 does not include the insulating layer between the cooling conduits and the stator body, whereas electrical machine 304 may be similar in construction to electrical machine 102 in FIG. 1. In electrical machine 302, due to the lack of the insulating layers, the cooling conduits are positioned further away in the radial direction from the stator core than compared to the cooling conduits in electrical machine 304. Accordingly, the electrical machine 302 demonstrates decreased cooling performance as indicated by higher winding temperatures for a given shaft distance. For example, in FIG. 5, the winding temperature in electrical machine 302 is approximately 98 °C at 135 mm from the shaft and approximately 112 °C at 155 mm from the shaft, whereas the winding temperature in electrical machine 304 is approximately 74 °C at 135 mm from the shaft and approximately 81 °C at 155 mm from the shaft. In this regard, the electrical machine 304 demonstrates improved thermal heat transfer (e.g., cooling) performance over electrical machine 302 based on the electrical machine 304 including the insulating layer 126 between the conduit 122 and the stator core 112, thereby allowing the cooling channel 116 to be positioned closer to the stator core 112 and the electrical windings than if the electrical machine did not include the insulating layer 126 therein, such as in electrical machine 302.

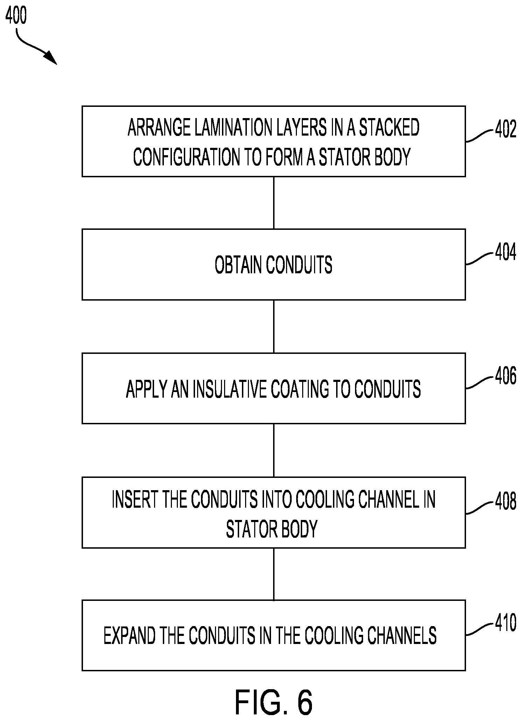

FIG. 6 is a flow diagram of a method 400, according to some embodiments.

The method 400 relates to manufacturing of a stator for an electric rotating machine such as, for example, the stator 104 in electrical machine 102 as shown in FIG. 1. At 402, the method 400 includes arranging a plurality of lamination layers in a stacked configuration to form a stator body. The lamination layers may correspond to lamination layers 110 forming body 108 of stator 104 in FIG. 1. Each lamination layer of the plurality of lamination layer may include a stator core extending through each lamination layer on a first axis, and cooling channels having one or more cross-sectional diameters extending through each lamination layer on a respective second axis. The stator core and the cooling channels may correspond to stator core 112 and cooling channel 116 in FIG. 1. The lamination layers may be arranged relative other lamination layers of the plurality of lamination layers so that the stator core and the cooling channels in each respective layer are substantially in colinear alignment with the cooling channels in the other lamination layers. In some embodiments, forming the stator body may include applying a second insulating coating between the lamination layers prior to stacking the layers. In this regard, each of the lamination layers may form individual insulated lamination layers, and as may be appreciated by those having ordinary skill in the art.

In some embodiments, the method 400 includes obtaining the lamination layers and forming the cooling channels in the lamination layers. In some embodiments, the cooling channels may be formed in the lamination layers by drilling a through-channel through the metallic lamination. In some embodiments, the channels may be formed individually at each lamination layer prior to stacking the lamination layers to form the stator body. In other embodiments, the cooling channels may be formed after stacking the lamination layers to form the stator body.

At 404, the method obtaining metal conduits configured for insertion in the cooling channels. The metal conduits may correspond to the conduit 122 in FIG. 1. In some embodiments, the number of metal conduits may correspond to the number of cooling channels in the stator body. The diameter of the metal conduits may be less than a diameter of the cooling channel. In some embodiments, if the diameter of the channel varies as it extends through the stator body, the diameter of the metal conduit being inserted into the respective cooling channel may be less than the smallest diameter of the channel. In other embodiments, the conduit may be less than or equal to smallest diameter of the cooling channel.

In some embodiments, the number of metal conduits configured to be installed in the stator body may be less than the number of channels formed in the stator body. That is, the lamination layers may be formed with a certain number of channels extending therethrough but the number of those channels that may be utilized for thermal heat transfer purposes may vary based on different factors such as, for example, desired thermal performance, desired electromagnetic field characteristics, electrical machine size, rating, environment, other like factors, or any combinations thereof.

At 406, the method 400 includes applying an insulative coating on an exterior surface of the metal conduits. The insulative coating, when the metal conduit is expanded in the cooling channels and the insulative coating therebetween is cured, forms an insulating layer between the metal conduit and the cooling channel inner surface. The insulating layer may correspond to the insulating layer 126 in FIG. 1.

The insulative coating may include, but is not limited to, films, tapes, epoxies, adhesives, gels, grease, resins, fluids, thermosets, thermoplastics, and the like, which are capable of being applied to the exterior surface of the metal conduit and forming a coating layer on the conduit prior to insertion of the conduit in the cooling channel. For example, if the material is a thermoset, the material may be extruded onto the exterior surface of the conduit to form the insulative coating. In some embodiments, the insulative coating may be a film or tape that is applied to cover the exterior surface of the conduit prior to insertion. In other embodiments, the insulative coating may be a fluid having a certain viscosity and into which the conduit is dipped so that the fluid coats the exterior surface of the conduit prior to insertion. In yet other embodiments, the insulative coating may be a fluid having a viscosity sufficient to enable the material to be sprayed onto the exterior surface of the conduit to form the insulative coating.

The insulative coating may be made of any of a plurality of different materials including, but not limited to, acrylics, resins, polyimide, fluorinated ethylene propylene (FEP), per- and perfluoroalkoxy substances (PFAS), silicon-based compounds, silicone-based compounds, ester-based compounds, urethane-based compounds, fillers, oils, other like materials, or any combinations thereof. For example, the insulative coating may include, but is not limited to, acrylic films, polyimide films, perfluoroalkoxy(vinyl ether) resin mixes, silicone- based greases, ester-based joint compounds, urethane-based adhesives, and other like coatings. It is to be appreciated by those having ordinary skill in the art that the insulative coatings described herein are exemplary and not intended to be limiting, that is, the insulative coatings and the materials from which the insulative coatings are made may include these and other like materials that are capable of coating an exterior surface of a metal conduit prior to insertion of the metal conduit in the channel and being cured such that the insulative coating forms an insulative layer that substantially eliminates metal-to metal contact between the metal conduit and the inner surface of the channel in the stator while also being capable of sufficient thermal heat transfer to remove heat from the stator body during operation of the electrical machine.

According to some embodiments, the insulative material may also include other materials configured to enable the insulative coating to maintain separation between the metal conduit and the inner surface of the cooling channel such as, for example, during the insertion of the metal conduit in the cooling channel and/or during the hydraulic expansion of the metal conduit. These other materials may include, but is not limited to, glass beads, alumina, carbon nanotubes, graphene, boron nitride, other like materials, or any combinations thereof. These other materials configured to provide surface separation may include any of a plurality of different sizes ranging from 10 um to 500 um, or any ranges, or subranges therebetween. In some embodiments, the other materials may range in size from 20 um to 50 um. In addition, these other materials configured to provide surface separation may be added to the insulative coating material(s) at any of a plurality of different volume loading from 20 vol% to 60 vol%, or any range, or subrange, therebetween. In some embodiments, the other materials may be added at a volume loading from 30 vol% to 50 vol%.

At 408, the method 400 includes inserting the metal conduits into a respective cooling channel of the plurality of cooling channels in the stator body. For example, FIG. 1 shows a non-limiting example of the metal conduit 122 positioned in the cooling channel 116 of the stator body 108. The metal conduits are positioned such that they longitudinally extend through the stator body in their respective channels. That is, a length of the metal conduit may, in some embodiments, correspond to the length of the channel (and the stator body) such that the ends of the metal conduit may be further connected to other conduit segments for distributing the heat transfer medium therethrough. In some embodiments, the metal conduit may be substantially similar to, or greater than, the length of the channel.

The insulative coating may be applied to the metal conduit prior to insertion into the cooling channel. The metal conduits should be inserted into the cooling channels before the curing reaction of the insulative coating material is complete and the insulative layer is formed. In addition, inserting the conduit prior to curing may enable the insulative coating to act as a lubricant for insertion. In some embodiments, the insulative coating may be allowed to partially cure prior to inserting the metal conduit in the cooling channel. Partially curing the insulative coating prior to insertion of the metal conduit in the cooling channel may help prevent or limit the insulative coating being abraded/scratched during the insertion, such that the effectiveness of the insulative layer is not compromised once fully cured.

At 410, the method 400 includes expanding the metal conduits in the respective cooling channels. The metal conduits may be configured to be expanded in the cooling channels such that the insulative coating applied to the exterior surface of the metal conduit may form the insulating layer between the exterior surface of the conduit and the inner surface of the cooling channel. When cured and forming the insulating layer, the insulating layer may be configured to place the cooling channel in thermal connection with the stator body, while the insulating layer also electrically insulates the metal conduit from the metal stator body. In this regard, the insulating layer enables the cooling channels to effectively be formed at any distance in the radial direction from the stator core at the lamination layers so long as the structural integrity of the stator body between the cooling channels and, for example, the stator core is not at risk of failure.

In some embodiments, expanding the metal conduit includes hydraulically expanding the metal conduit in the cooling channel. The metal conduit positioned in the cooling channel of the stator body may be hydraulically expanded in the cooling channel, according to some embodiments. A hydraulic expansion tool may be applied to the ends of the metal conduit and an expansion pressure applied to an interior of the metal conduit sufficient to cause the metal conduit to mechanically deform and to substantially conform to the dimensions of the cooling channel. The pressure applied to hydraulically expand the metal conduit may be configured, in some embodiments, so that the insulative coating is able to fill a space between the hydraulically expanded metal conduit and the cooling channel while preventing metal-to-metal contact between the metal conduit and the stator body.

The insulative coating may be allowed to sufficiently cure prior to expansion of the metal conduit in the channel, according to some embodiments. In some embodiments, the metal conduit may be expanded after the insulative coating has fully cured. In other embodiments, the metal conduit may be expanded while the insulative coating is partially cured. In this regard, since the insulative coating is not fully cured, the insulative coating may be compliant and resistant to cracking under the expansion force. At the same time, the partially cured insulating layer may also provide sufficient insulation between the tube and the lamination stack to prevent metal-to-metal contact between the metal conduit and the stator body. In some embodiments, after the expansion of the metal conduit, the method 400 may include heating the stator to a curing temperature for a certain time period to allow the insulating coating to fully cure.

The insulating layer eliminates the electromagnetic losses and end-to-end shaft current that typically were caused by the direct metal-to-metal contact between the stator body, and the different individual insulated lamination layers of the stator body, and the metal conduit expanded in the cooling channel. In addition, the insulating layers enables the cooling channels to be positioned relatively closer to the heat generating components in the electrical machines than compared to conventional electrical machines, thereby allowing for improved topologies at the lamination layers capable of optimal thermal heat transfer performance for removing heat generated during operation of the electrical machines.

All prior patents and publications referenced herein are incorporated by reference in their entireties.

Throughout the specification and claims, the following terms take the meanings explicitly associated herein, unless the context clearly dictates otherwise. The phrases "in one embodiment," "in an embodiment," and "in some embodiments" as used herein do not necessarily refer to the same embodiment(s), though it may. Furthermore, the phrases "in another embodiment" and "in some other embodiments" as used herein do not necessarily refer to a different embodiment, although it may. All embodiments of the disclosure are intended to be combinable without departing from the scope or spirit of the disclosure.

### [ZOT - definition of terms - use as needed]

As used herein, the term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, the term "between" does not necessarily require being disposed directly next to other elements. Generally, this term means a configuration where something is sandwiched by two or more other things. At the same time, the term "between" can describe something that is directly next to two opposing things. Accordingly, in any one or more of the embodiments disclosed herein, a particular structural component being disposed between two other structural elements can be:
disposed directly between both of the two other structural elements such that the particular structural component is in direct contact with both of the two other structural elements;
disposed directly next to only one of the two other structural elements such that the particular structural component is in direct contact with only one of the two other structural elements;
disposed indirectly next to only one of the two other structural elements such that the particular structural component is not in direct contact with only one of the two other structural elements, and there is another element which juxtaposes the particular structural component and the one of the two other structural elements;
disposed indirectly between both of the two other structural elements such that the particular structural component is not in direct contact with both of the two other structural elements, and other features can be disposed therebetween; or
any combination(s) thereof.

### ASPECTS

Various Aspects are described below. It is to be understood that any one or more of the features recited in the following Aspect(s) can be combined with any one or more other Aspect(s).

Aspect 1. A stator assembly for an electrical rotating machine, the stator assembly comprising: a body comprising at least one lamination layer; a plurality of cooling channels, wherein the plurality of cooling channels extend through the body; a plurality of conduits, wherein the plurality of conduits are located in the plurality of cooling channels; and an insulating layer, wherein the insulating layer is located between each conduit of the plurality of conduits and a corresponding cooling channel of the plurality of cooling channels, the insulating layer being configured to simultaneously place each conduit in thermal contact with the body while electrically insulating each conduit from the body.

Aspect 2. The stator assembly according to aspect 1, wherein the insulating layer enables eliminating eddy current losses and reducing electromagnetic losses while providing thermal heat transfer capabilities to remove heat generated during operation of the electrical rotating machine.

Aspect 3. The stator assembly according to any of the preceding aspects, wherein the at least one lamination layer comprises a first metallic material that is electrically conductive; wherein the plurality of conduits comprises a second metallic material that is electrically conductive.

Aspect 4. The stator assembly according to aspect 3, wherein the second metallic material comprises copper.

Aspect 5. The stator assembly according to any of the preceding aspects, wherein the plurality of conduits are configured to be hydraulically expanded in the plurality of cooling channels.

Aspect 6. The stator assembly according to any of the preceding aspects, wherein the insulating layer is configured to be applied onto an exterior surface of each conduit and forms an insulative coating prior to inserting each conduit through the corresponding cooling channel; wherein the insulating layer further comprises a filler comprising one or more of glass beads, alumina, carbon nanotubes, graphene, boron nitride, or any combinations thereof.

Aspect 7. The stator assembly according to aspects 5 or 6, wherein the insulating layer is configured to be at least partially cured prior to inserting each conduit through the corresponding cooling channel.

Aspect 8. The stator assembly according to aspects 5, 6, or 7, wherein the insulating layer is configured to be at least partially cured prior to hydraulically expanding the plurality of conduits in the plurality of cooling channels; wherein the insulating layer is fully cured after the plurality of conduits are hydraulically expanded in the plurality of cooling channels.

Aspect 9. The stator assembly according to aspects 5 or 6, wherein the insulating layer is configured to be fully cured prior to hydraulically expanding the plurality of conduits in the plurality of cooling channels.

Aspect 10. The stator assembly according to any of the preceding aspects, wherein the insulating layer enables the plurality of cooling channels to be positioned adjacent a stator core extending through the body without substantially increasing eddy current losses and electromagnetic losses caused by a relative position of the plurality of cooling channels.

Aspect 11. The stator assembly according to any of the preceding aspects, wherein the plurality of cooling channels extend through the body in a direction substantially parallel to a stator core.

Aspect 12. A system comprising: an electrical rotating machine comprising: a stator having a metal body including a stator core configured to receive a rotor, the stator comprising: at least one lamination layer; a stator core extending through the metal body; and cooling channels extending through the metal body, the cooling channels being circumferentially arranged around the stator core; a plurality of metal conduits extending through the metal body at one or more of the cooling channels, the plurality of metal conduits being configured to be hydraulically expanded in a respective cooling channel; and an insulating layer coating an exterior surface of the plurality of metal conduits, wherein the insulating layer is located between each metal conduit of the plurality of metal conduits and the respective cooling channel, the insulating layer being configured to simultaneously place each metal conduit in thermal contact with the metal body while electrically insulating each metal conduit from the metal body.

Aspect 13. The system according to aspect 12, wherein the insulating layer enables eliminating eddy current losses and reducing electromagnetic losses while providing thermal heat transfer capabilities to remove heat generated during operation of the electrical rotating machine.

Aspect 14. The system according to aspects 12 or 13, wherein the plurality of metal conduits comprises copper.

Aspect 15. The system according to aspects 12, 13, or 14, wherein the insulating layer is configured to be at least partially cured prior to hydraulically expanding the plurality of metal conduits in the respective cooling channel; wherein the insulating layer further comprises a filler comprising one or more of glass beads, alumina, carbon nanotubes, graphene, boron nitride, or any combinations thereof.

Aspect 16. The system according to aspects 12, 13, 14, or 15, wherein the insulating layer is configured to be fully cured prior to hydraulically expanding the plurality of metal conduits in the respective cooling channel.

Aspect 17. The system according to aspects 12, 13, 14, 15, or 16, wherein the insulating layer enables the cooling channels to be positioned in the metal body adjacent the stator core without substantially increasing eddy current losses and electromagnetic losses caused by a relative position of the cooling channels.

Aspect 18. A method of manufacturing a stator for an electrical rotating machine, the method comprising: arranging lamination layers in a stacked configuration to form a stator body; obtaining metal conduits configured to be inserted into one or more cooling channels formed in the stator body; applying an insulative coating to the metal conduits configured to form an insulating layer; inserting the metal conduits into the one or more cooling channels; and expanding the metal conduits in the one or more cooling channels; wherein the insulating layer is configured to be located between each metal conduit and a corresponding cooling channel, the insulating layer being configured to simultaneously place each conduit in thermal contact with the stator body while electrically insulating each conduit from the stator body.

Aspect 19. The method according to aspect 18, wherein the insulative coating is partially cured prior to inserting the metal conduits into the one or more cooling channels; and wherein the insulative coating is partially cured prior to expanding the metal conduits in the one or more cooling channels; and wherein the insulating layer is fully cured after the metal conduits are hydraulically expanded in the one or more cooling channels.

Aspect 20. The method according to aspects 18 or 19, wherein the insulative coating is fully cured prior to expanding the metal conduits in the one or more cooling channels.

It is to be understood that changes may be made in detail, especially in matters of the construction materials employed and the shape, size, and arrangement of parts without departing from the scope of the present disclosure. This Specification and the embodiments described are examples, with the true scope and spirit of the disclosure being indicated by the claims that follow.

## Claims

1. A stator assembly for an electrical rotating machine, the stator assembly comprising:
a body comprising at least one lamination layer;
a plurality of cooling channels,
wherein the plurality of cooling channels extend through the body;
a plurality of conduits,
wherein the plurality of conduits are located in the plurality of cooling channels; and
an insulating layer,
wherein the insulating layer is located between each conduit of the plurality of conduits and a corresponding cooling channel of the plurality of cooling channels, the insulating layer being configured to simultaneously place each conduit in thermal contact with the body while electrically insulating each conduit from the body.

2. The stator assembly of claim 1, wherein the insulating layer enables eliminating eddy current losses and reducing electromagnetic losses while providing thermal heat transfer capabilities to remove heat generated during operation of the electrical rotating machine.

3. The stator assembly of claim 1, wherein the at least one lamination layer comprises a first metallic material that is electrically conductive;
wherein the plurality of conduits comprises a second metallic material that is electrically conductive.

4. The stator assembly of claim 3, wherein the second metallic material comprises copper.

5. The stator assembly of claim 1, wherein the plurality of conduits are configured to be hydraulically expanded in the plurality of cooling channels.

6. The stator assembly of claim 5, wherein the insulating layer is configured to be applied onto an exterior surface of each conduit and forms an insulative coating prior to inserting each conduit through the corresponding cooling channel;
wherein the insulating layer further comprises a filler comprising one or more of glass beads, alumina, carbon nanotubes, graphene, boron nitride, or any combinations thereof.

7. The stator assembly of claim 6, wherein the insulating layer is configured to be at least partially cured prior to inserting each conduit through the corresponding cooling channel.

8. The stator assembly of claim 6, wherein the insulating layer is configured to be at least partially cured prior to hydraulically expanding the plurality of conduits in the plurality of cooling channels;
wherein the insulating layer is fully cured after the plurality of conduits are hydraulically expanded in the plurality of cooling channels.

9. The stator assembly of claim 6, wherein the insulating layer is configured to be fully cured prior to hydraulically expanding the plurality of conduits in the plurality of cooling channels.

10. The stator assembly of claim 1, wherein the insulating layer enables the plurality of cooling channels to be positioned adjacent a stator core extending through the body without substantially increasing eddy current losses and electromagnetic losses caused by a relative position of the plurality of cooling channels.

11. The stator assembly of claim 1, wherein the plurality of cooling channels extend through the body in a direction substantially parallel to a stator core.

12. A system comprising:
an electrical rotating machine comprising:
a stator having a metal body including a stator core configured to receive a rotor, the stator comprising:
at least one lamination layer,
a stator core extending through the metal body, and
cooling channels extending through the metal body, the cooling channels being circumferentially arranged around the stator core;
a plurality of metal conduits extending through the metal body at one or more of the cooling channels, the plurality of metal conduits being configured to be hydraulically expanded in a respective cooling channel; and
an insulating layer coating an exterior surface of the plurality of metal
conduits,
wherein the insulating layer is located between each metal conduit of the plurality of metal conduits and the respective cooling channel, the insulating layer being configured to simultaneously place each metal conduit in thermal contact with the metal body while electrically insulating each metal conduit from the metal body.

13. A method of manufacturing a stator for an electrical rotating machine, the method comprising:
arranging lamination layers in a stacked configuration to form a stator body;
obtaining metal conduits configured to be inserted into one or more cooling channels formed in the stator body;
applying an insulative coating to the metal conduits configured to form an insulating layer;
inserting the metal conduits into the one or more cooling channels; and
expanding the metal conduits in the one or more cooling channels;
wherein the insulating layer is configured to be located between each metal conduit and a corresponding cooling channel, the insulating layer being configured to simultaneously place each conduit in thermal contact with the stator body while electrically insulating each conduit from the stator body.

14. The method of claim 13, wherein the insulative coating is partially cured prior to inserting the metal conduits into the one or more cooling channels;
wherein the insulative coating is partially cured prior to expanding the metal conduits in the one or more cooling channels; and
wherein the insulating layer is fully cured after the metal conduits are hydraulically expanded in the one or more cooling channels.

15. The method of claim 14, wherein the insulative coating is fully cured prior to expanding the metal conduits in the one or more cooling channels.
